# EUROPÄISCHE PATENTSCHRIFT

(11) **EP 0 751 448 B1**
(45) Veröffentlichungstag und Bekanntmachung des Hinweises auf die Patenterteilung: **14.03.2001**
(21) Anmeldenummer: 95120530.1
(22) Anmeldetag: 27.12.1995
(51) Int. Cl.: G05D 16/06, G05D 7/01

(54) **Durchfluss-Regelventil**
Flow control valve
Vanne de régulation de débit

(30) Priorität: 28.06.1995 CH 189195
(43) Veröffentlichungstag der Anmeldung: 02.01.1997
(73) Patentinhaber: Siemens Building Technologies AG, 6300 Zug (CH)
(72) Erfinder: Hagmann, Stefan, CH-6344 Meierskappel (CH)

(56) Entgegenhaltungen:
- CH-A- 313 023
- DE-A- 2 705 891
- DE-C- 508 732
- US-A- 3 344 805

## Beschreibung

Die Erfindung bezieht sich auf ein Durchfluß-Regelventil nach dem Oberbegriff des Anspruchs 1.

Beispielsweise in Heizungsanlagen besteht die Notwendigkeit, Flüssigkeitsströme zu regeln. Dabei soll der Volumenstrom unabhängig vom herrschenden Differenzdruck sein. Um diese Aufgabe zu lösen, ist wie beispielsweise in "Recknagel, Sprenger, Hönmann: Taschenbuch für Heizung- und Klimatechnik", Ausgabe 92/93, Seite 433, Bild 223-25, angegeben, eine Reihenschaltung von Druckminderer und Mengenregler vorzusehen. Der Druckminderer ist dabei ein Ventil, das so viel Druck vernichtet, daß über dem Mengenregler ein konstanter Differenzdruck herrscht. Ist das der Fall, dann besteht beim als Mengenregler eingesetzten Ventil ein definierter Zusammenhang zwischen Ventilstellung und Durchfluß.

Das als Mengenregler eingesetzte Ventil weist einen bestimmten Nenndurchfluß bei maximaler Öffnung auf. Dieser höchstmögliche Durchfluß ist für viele Anwendungsfälle zu groß. Aus diesem Grund weisen solche Mengenregler vielfach eine Einrichtung zur Durchflußbegrenzung auf. Die Durchflußbegrenzung wird dabei durch eine Hubbegrenzung erreicht. Durch diese Hubbegrenzung steht nun allerdings nur noch ein kleinerer Verstellbereich zur Verfügung, was hinsichtlich der Regeleigenschaften nachteilig ist.

Weiterhin offenbart DE-A-2 705 891 ein Regelventil mit selbsttätiger Regelung der Durchflußmenge des durchströmenden Mediums, bei dem die Durchflußöffnung eines in den Ventilgehäuse angeordneten Ventilsitzes durch einen Ventilkegel beeinflußbar ist, welcher mit einem mit der Differenz der Drükke vor und hinter einer im Strömungsweg liegenden, stufenlos verstellbaren Meßblende beaufschlagten und ein Sollwertglied enthaltenden Stellmotor gekuppelt ist, wobei die Meßblende durch einen in dem Ventilgehäuse auf der dem Ventilkegel abgewandten Seite des Ventilsitzes angeordneten, seinerseits gegebenenfalls durch einen in einem Regelkreis liegenden Stellmotor verstellbaren Drosselkörper gebildet ist.

Der Erfindung liegt die Aufgabe zugrunde, ein kompaktes Durchfluß-Regelventil zu schaffen, das als Druckregelventil den Durchfluß vom Differenzdruck unabhängig macht, so daß der Durchfluß eine eindeutige Funktion des Ventil-Öffnungsgrades ist, und dessen Durchflußbegrenzung so gestaltet ist, daß der volle Verstellbereich erhalten bleibt.

Die genannte Aufgabe wird erfindungsgemäß durch die Merkmale des Anspruchs 1 gelöst. Vorteilhafte Ausgestaltungen ergeben sich aus den abhängigen Ansprüchen.

Es zeigen:
- Fig. 1: eine Schnittzeichnung eines Durchfluß-Regelventils,
- Fig. 2a und 2b: Schemata des durchflußbestimmenden Querschnitts und
- Fig. 3: ein Durchflußdiagramm.

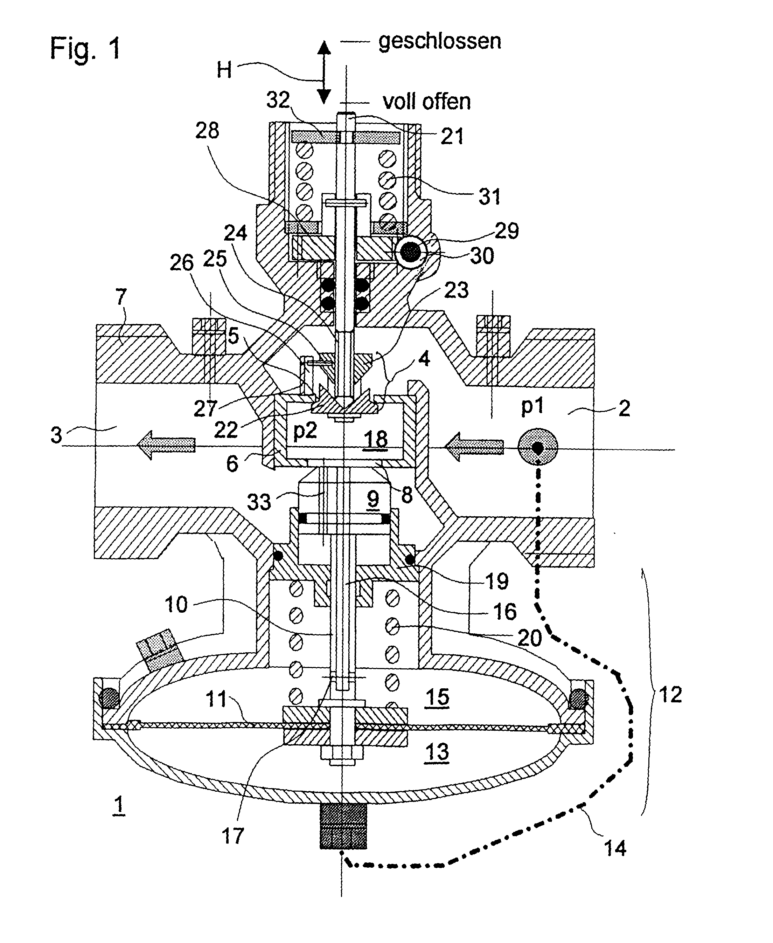

In der Figur 1 ist mit 1 ein Durchfluß-Regelventil bezeichnet, durch dessen Einlaßraum 2 das Strömungsmedium in das Durchfluß-Regelventil 1 eintritt und durch dessen Auslaßraum 3 das Strömungsmedium das Durchfluß-Regelventil 1 wieder verläßt, wie dies auch durch Pfeile dargestellt ist. Zwischen dem Einlaßraum 2 und dem Auslaßraum 3 befinden sich zwei in Reihe geschaltete Drosselstellen. Eine erste Drosselstelle wird gebildet von einem Kegel 4, der mit einer ersten Öffnung 5 eines Doppelsitzkäfigs 6 zusammenwirkt. Der Kegel 4 ist gegenüber dem Doppelsitzkäfig 6 bewegbar, was die Verstellung des Ventil-Öffnungsgrades ermöglicht.

Der Doppelsitzkäfig 6 ist mit einem Ventilgehäuse 7 fest verbunden. An der der ersten Öffnung 5 gegenüber liegenden Seite weist der Doppelsitzkäfig 6 eine zweite Öffnung 8 auf. Relativ zu dieser Öffnung 8 ist ein Regelkegel 9 bewegbar. Dieser Regelkegel 9 ist mittels einer Stange 10 mit einer Membran 11 verbunden. Diese Membran 11 ist Teil eines hydraulischen Antriebs 12, der den Regelkegel 9 relativ zur Öffnung 8 steuert. Diese Steuerung wird dadurch ermöglicht, daß auf die Membran 11 einerseits der Eingangsdruck und andererseits der Druck innerhalb des Doppelsitzkäfigs 6 wirken. Um diese Wirkung zu erreichen, ist eine erste Druckkammer 13 vorhanden, die über eine Leitung 14 mit dem Einlaßraum 2 verbunden ist. Eine zweite Druckkammer 15 ist über eine in der Stange 10 vorhandenen Bohrung 16 und eine Querbohrung 17 mit dem Raum 18 innerhalb des Doppelsitzkäfigs 6 verbunden.

Mit dem Ventilgehäuse 7 ist ein Führungsgehäuse 19 verbunden, das einerseits der Führung des Regelkegels 9 dient, andererseits als Abstützung für eine Reglerfeder 20 dient. Diese Reglerfeder 20 bestimmt den Sollwert der Druckdifferenz, auf den diese Einrichtung regelt. Deren Kraft addiert sich zu jener Kraft, die der Regelkegel 9 auf die Membran 11 auswirkt. Dieser Kraft entgegengerichtet ist jene Kraft, die aus dem im Einlaßraum 2 herrschenden Druck p1 resultiert. Steigt der Druck p1 im Einlaßraum 2, so steigt auch der Druck in der Druckkammer 13. Dieser steigende Druck bewegt die Membran 11 so weit gegen die Reglerfeder 20, bis wieder ein Kräftegleichgewicht herrscht. Gleichzeitig wird durch die Bewegung der Membran 11 über die Stange 10 der Regelkegel 9 in Richtung auf die Öffnung 8 bewegt, so daß der Druck p2 innerhalb des Doppelsitzkäfigs 8, also im Raum 18, in gleichem Maße steigt wie der Druck p1 im Einlaßraum 2. Entsprechend bleibt die Druckdifferenz zwischen dem Einlaßraum 2 und dem Raum 18 konstant.

Damit bleibt auch der Druck über der zuvor erwähnten ersten Drosselstelle, die vom Kegel 4 und der ersten Öffnung 5 des Doppelsitzkäfigs 6 gebildet wird, konstant. Damit wird die Verstellung des Ventil-Öffnungsgrades differenzdruckunabhängig.

Als eigentliches Verstellorgan für den Durchfluß dient diese erste Drosselstelle. Erfindungsgemäß ist diese erste Drosselstelle so ausgebildet, daß eine Begrenzung des Durchflusses ohne eine Hubbegrenzung möglich ist, so daß immer der volle Hub erfolgen kann, was hinsichtlich der Regeleigenschaften günstig ist. Erreicht wird das durch die Gestaltung des Kegels 4.

Das Verstellorgan für den Durchfluß besteht aus diesem Kegel 4, der an einer Ventilspindel 21 befestigt ist. Durch axiale Bewegung der Ventilspindel 21 kann in bekannter Weise der Durchfluß verändert werden. Dazu dient ein in der Fig. 1 nicht dargestellter Ventilantrieb beliebiger Bauart. Dieser Ventilantrieb ermöglicht einen Hub H der Spindel zwischen den beiden Endlagen "geschlossen" und "voll offen". Der Ventilantrieb ist in der Regel stetig, so daß zwischen den beiden Endlagen beliebige Zwischenstellungen möglich sind.

Erfindungsgemäß besteht der Kegel 4 aus einem starr an der Ventilspindel 21 ersten Kegelteil 22 und einem relativ dazu axial unterschiedlich positionierbaren zweiten Kegelteil 23. Der Abstand zwischen dem ersten Kegelteil 22 und dem zweiten Kegelteil 23 ist dadurch veränderbar. Die Ausführungsart dieser relativen Positionierbarkeit kann unterschiedlich sein. In der Fig. 1 ist eine mögliche Ausführungsart gezeigt. Dabei weist die Ventilspindel 21 in jenem Bereich, in dem das zweite Kegelteil 23 sitzt, ein Gewinde 24 auf. Das Kegelteil 23 besitzt in seiner inneren Bohrung ein dazu passendes Gewinde. Im Kegelteil 23 ist ein Stift 25 befestigt, der in eine Führungsnut 26 eingreift, die in einem Bolzen 27 eingearbeitet ist. Der Bolzen 27 ist mit dem Doppelsitzkäfig 6 fest verbunden.

Durch diese Anordnung wird erreicht, daß sich bei einer Drehbewegung der Ventilspindel 21 der Abstand zwischen dem ersten Kegelteil 22 und dem zweiten Kegelteil 23 verändert. Bei Drehung in der einen Richtung vergrößert sich der Abstand und bei Drehung in der entgegengesetzten Richtung verkleinert sich der Abstand.

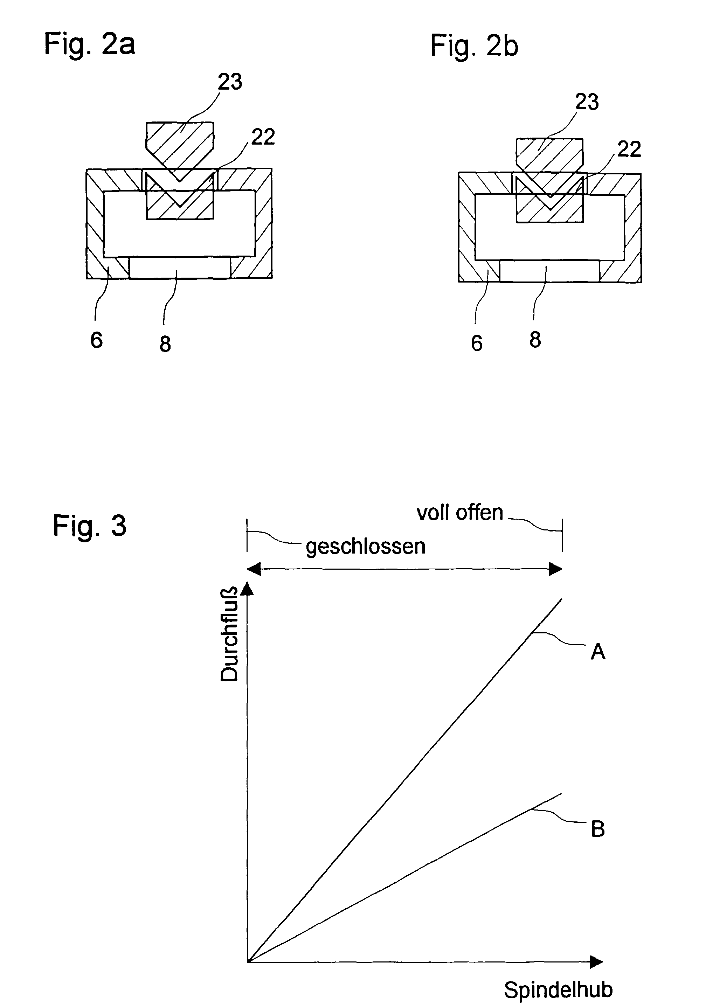

In den Figuren 2a und 2b, in den gleiche Bezugszahlen wie in der Fig. 1 auch gleiche Teile bedeuten, sind auf diese Weise entstandene unterschiedliche Abstände zwischen den Kegelteilen 22, 23 gezeigt. Bei gleicher Position des mit der Ventilspindel 21 verbundenen unteren Kegelteils 22 sind die Positionen des oberen Kegelteils 23 unterschiedlich. In Fig. 2a ist der Abstand zwischen den beiden Kegelteilen 22, 23 groß, in Fig. 2b ist er wesentlich kleiner. Daraus folgt, daß trotz gleicher Spindelstellung der Durchfluß im Fall der Fig. 2b kleiner ist als im Fall der Fig. 2a.

Die Verstellung des Abstandes zwischen den Kegelteilen 22, 23 durch eine Drehbewegung der Ventilspindel 21 wird (Fig. 1) dadurch erreicht, daß mit der Ventilspindel 21 ein Zahnrad 28 fest verbunden ist. In den Zahnkranz dieses Zahnrades 28 greift ein auf einer Welle 29 befestigtes Schneckenrad 30 ein. Die Welle 29 wird entweder von Hand oder vorteilhaft von einem nicht dargestellten Verstellmotor angetrieben. Die Motorisierung der Verstellung ermöglicht die Fernverstellung. Damit kann ein Regler die Verstellung bewirken. Das ist in größeren Anlagen vorteilhaft, wenn mehrere Durchfluß-Regelventile 1 gesteuert werden sollen. Damit ist es beispielsweise möglich, die Volumenstrombegrenzung ferngesteuert durch eine Zentrale vorzunehmen. Diese Lösung eröffnet neue Möglichkeiten der zentralen Steuerung von größeren Anlagen. So kann beispielsweise ein Fernheizwerk die Maximalbegrenzung des Volumenstroms bei den Abnehmern beeinflussen und damit auf besondere Situationen wie außerordentliche Kälteperiode oder Leistungsminderung im Fernheizwerk reagieren.

Das dargestellte Durchfluß-Regelventil 1 ist so ausgelegt, daß es bei nicht betätigtem Ventilantrieb selbsttätig in die Endstellung "geschlossen" läuft. Dazu dient in bekannter Weise eine Druckfeder 31, die sich einerseits am Ventilgehäuse 7 und andererseits an einer mit der Ventilspindel 21 verbundenen Druckplatte 32 abstützt.

Der Vollständigkeit halber sei noch erwähnt, daß der Regelkegel 9 eine Bohrung 33 aufweist, die der Druckentlastung dient. Durch diese Druckentlastung wird in bekannter Weise die auf den Regelkegel 9 wirkende Kraft kompensiert.

In der Fig. 3 ist ein Durchflußdiagramm gezeigt. Mit Linienzügen ist die Abhängigkeit des Durchflusses vom Spindelhub dargestellt. Eine erste Kurve A zeigt die Durchflußcharakteristik bei einem großen Abstand der beiden Kegelteile 22, 23 gemäß Fig. 2a und eine zweite Kurve B zeigt sie bei einem kleineren Abstand gemäß Fig. 2b.

Der Nenndurchfluß durch das Durchfluß-Regelventil 1 ist gegeben durch den größten einstellbaren Abstand der Kegelteile 22, 23 bei gegenüber der Schließstellung größten Hub des Ventilspindel 21. Durch Verkleinern des Abstands der Kegelteile 22, 23 findet eine über den ganzen Verstellbereich der Ventilspindel 21 wirksame Verringerung des Durchflusses statt.

Sowohl bei größtmöglichem Abstand der Kegelteile 22, 23 als auch bei jedem kleineren Abstand steht der volle Hub der Ventilspindel 21 zur Verfügung. Damit wird erreicht, daß der volle Verstellbereich der Ventilspindel 21, also der volle Regelbereich, immer zur Verfügung steht.

## Patentansprüche

1. Durchfluß-Regelventil (1) mit einer ersten Drosselstelle (8, 9), mittels der eine Druckdifferenz über einer zweiten Drosselstelle (4, 5) auf einen konstanten Wert regelbar ist, wobei diese Regelung mittels eines hydraulischen Antriebs (12) erfolgt, der eine Membran (11) aufweist, deren eine Seite eine Wandung einer ersten Druckkammer (13) bildet, die mit einem Einlaßraum (2) des Durchfluß-Regelventils (1) verbunden ist, und deren zweite Seite eine Wandung einer zweiten Druckkammer (15) bildet, die mit einem Raum (18) hinter der zweiten Drosselstelle (4, 5) verbunden ist, wobei diese Membran (11) über eine Stange (10) mit einem Regelkegel (9) verbunden ist, der Bestandteil der ersten Drosselstelle (8, 9) ist, und
a. die zweite Drosselstelle (4, 5) im gleichen Ventilgehäuse (7) untergebracht ist wie die erste Drosselstelle, wobei
b. daß die zweite Drosselstelle (4, 5) einen mittels einer Ventilspindel (21) durch einen Ventilantrieb stufenlos gegenüber einer Öffnung (5) axial verschiebbaren Kegel (4) aufweist,
dadurch gekennzeichnet, daß der verschiebbare Kegel (4)
c. aus wenigstens zwei gegeneinander axial verschiebbaren Einzelteilen (22, 23) besteht,
d. durch deren Abstand der wirksame Querschnitt der Drosselstelle (4, 5) veränderbar ist.

2. Durchfluß-Regelventil (1) nach Anspruch 1, dadurch gekennzeichnet, daß ein erstes Kegelteil (22) starr mit der Ventilspindel (21) verbunden ist, während das zweite Kegelteil (23) auf der Ventilspindel (21) axial verschiebbar befestigt ist.

3. Durchfluß-Regelventil nach Anspruch 2, dadurch gekennzeichnet, daß das zweite Kegelteil (23) in einer inneren Bohrung ein Gewinde aufweist, welches in ein Gewinde aufder Ventilspindel (21) eingreift.

4. Durchfluß-Regelventil (1) nach Anspruch 3, dadurch gekennzeichnet, daß das zweite Kegelteil (23) so gehalten ist, daß es sich bei Verdrehung der Ventilspindel (21) nicht mitdrehen kann.

5. Durchfluß-Regelventil (1) nach Anspruch 4, dadurch gekennzeichnet, daß die Verdrehsicherung für das zweite Kegelteil (23) gebildet wird durch einen am Kegelteil (23) befestigten Stift (25), der in eine gegenüber dem Ventilgehäuse (7) fixierten Nut (26) eingreift.

6. Durchfluß-Regelventil (1) nach einem der Ansprüche 2 bis 5, dadurch gekennzeichnet, daß die Verstellung des Abstands zwischen den Kegelteilen (22, 23) durch eine Drehbewegung erfolgt, die ausgehend von einer drehbaren Welle (29) mit einem darauf befestigten Schneckenrad (30) auf ein an der Ventilspindel (21) befestigtes Zahnrad (28), das mit dem Schneckenrad (30) im Eingriff steht, auf die Ventilspindel (21) übertragbar ist.

7. Durchfluß-Regelventil (1) nach Anspruch 6, dadurch gekennzeichnet, daß die Welle (29) von einem Verstellmotor in Drehbewegung versetzbar ist und daß der Verstellmotor von einem Regler ansteuerbar ist.

## Claims

1. Flow control valve (1) with a first restricting point (8, 9) by means of which a differential pressure can be controlled to a constant value using a second restricting point (4, 5), wherein this control is done by means of a hydraulic actuator (12) which is provided with a membrane (11) one side of which forms a wall of a first pressure chamber (13) which is connected with an inlet space (2) of the flow control valve (1), and the second side of which forms a wall of a second pressure chamber (15) which is connected to a space (18) behind the second restricting point (4, 5), wherein this membrane (11) is connected via a rod (10) to a regulating cone (9) which is a component of the first restricting point (8, 9), and
a. the second restricting point (4, 5) is housed in the same valve housing (7) as the first restricting point, wherein
b. the second restricting point (4, 5) is provided with a cone (4) axially moveable with respect to an aperture (5) in a stepless manner by means of a valve actuator, characterised in that the moveable cone (4)
c. is composed of at least two individual parts (22, 23) moveable with respect to one another.
d. by means of the gap between which parts the effective cross-section of the restricting point (4, 5) can be altered.

2. Flow control valve (1) according to claim 1, characterised in that a first cone part (22) is rigidly connected to the valve spindle (21), while the second cone part (23) is fixed in an axially moveable manner onto the valve spindle (21).

3. Flow control valve according to claim 2, characterised in that the second cone part (23) has a thread in an internal bore, which thread engages in a thread on the valve spindle.

4. Flow control valve (1) according to claim 3, characterised in that the second cone part (23) is held such that when the valve spindle (21), said part is unable to rotate along with it.

5. Flow control valve (1) according to claim 4, characterised in that the securing from rotation of the second cone part (23) is formed by a pin (25) fixed onto the cone part (23), which pin engages in a groove located opposite the valve housing (7).

6. Flow control valve (1) according to one of claims 2 to 5, characterised in that the adjustment of the gap between the cone parts (22, 23) is done by means of a rotary movement which can be transmitted to the valve spindle initially from a rotatable shaft (29) with a screw gear (30) attached thereto, to a toothed wheel (28) attached to the valve spindle (21), which toothed wheel is engaged with the screw gear (30).

7. Flow control valve (1) according to claim 6, characterised in that the shaft (29) can be put into a rotary movement by means of an actuating motor, and that the actuating motor can be controlled by a controller.

## Revendications

1. Vanne de régulation de débit (1) comportant un premier étranglement (8,9), au moyen duquel une différence de pression au niveau d'un second étranglement (4,5) est réglable sur une valeur constante, cette régulation s'effectuant au moyen d'un dispositif d'entraînement hydraulique (12), qui comporte une membrane (11), dont une face forme une paroi d'une première chambre de pression (13), qui est reliée à une chambre d'admission (2) de la soupape de régulation de débit (1) et dont la seconde face forme une paroi d'une seconde chambre de pression (4), qui est reliée à une chambre (18) en arrière du second étranglement (4,5), cette membrane (11) étant reliée par l'intermédiaire d'une tige (10) à un cône de régulation (9), qui fait partie du premier étranglement (8,9), et
a. le second étranglement (4,5) étant logé dans le même boîtier de vanne (7) que le premier étranglement,
b. le second étranglement (4,5) possédant un cône (4) déplaçable axialement et progressivement par rapport à une ouverture (5) à l'aide d'une tige de vanne (21) au moyen d'un dispositif d'entraînement de la vanne,
caractérisée en ce que le cône déplaçable (4)
c. est constitué par au moins deux parties individuelles (22,23) déplaçables axialement l'une par rapport à l'autre,
d. dont la distance réciproque permet de modifier la surface transversale active de l'étranglement (4,5).

2. Vanne de régulation de débit (1) selon la revendication 1, caractérisée en ce qu'un premier élément (22) du cône est relié rigidement à la tige de vanne (21), tandis que la seconde partie (23) du cône est fixée sur la tige de vanne (21) de manière à être déplaçable axialement.

3. Vanne de régulation de débit selon la revendication 2, caractérisée en ce que la seconde partie (23) du cône possède, dans un perçage intérieur, un filetage, qui engrène avec le filetage situé sur la tige de vanne (21).

4. Vanne de régulation de débit (1) selon la revendication 3, caractérisée en ce que la seconde partie (23) du cône est retenue de telle sorte qu'elle ne peut pas tourner conjointement lors de la rotation de la tige de vanne (21).

5. Vanne de régulation de débit (1) selon la revendication 4, caractérisée en ce que le système de blocage en rotation de la seconde partie (23) du cône est formé par une tige (25) qui est fixée sur la partie (23) du cône et qui s'engage dans une gorge (26) qui est fixe par rapport au boîtier de vanne (7).

6. Vanne de régulation de débit (1) selon l'une des revendications 2 à 5, caractérisée en ce que le réglage de la distance entre les parties (21,23) du cône s'effectue au moyen d'un mouvement de rotation qui est transmis à la tige de vanne (21) à partir d'un arbre rotatif (29) comportant une roue à vis sans fin (30) fixée sur cet arbre, et ce au moyen d'un pignon (28), qui est fixé à la tige de vanne (21) et engrène avec la roue à vis sans fin (30).

7. Vanne de régulation de débit (1) selon la revendication 6, caractérisée en ce que l'arbre (29) peut être entraîné en rotation par un servomoteur et que le servomoteur peut être commandé par un régulateur.
